# EUROPÄISCHE PATENTSCHRIFT

(11) **EP 1 905 916 B1**
(45) Veröffentlichungstag und Bekanntmachung des Hinweises auf die Patenterteilung: **15.06.2011**
(21) Anmeldenummer: 06024354.0
(22) Anmeldetag: 24.11.2006
(51) Int. Cl.: E04B 9/00

(54) **Deckenbefestigungsprofilanordnung für flächige Objekte, insbesondere vertikal aufgehängte Glassscheiben als Rauchschürzen**
Arrangement for fixing flat objects to a ceiling, especially vertically suspended glass as a smoke enclosure
Dispositif de fixation d'objets plats au plafond, particulièrement de feuilles de verre comme protection contre la fumée

(30) Priorität: 29.09.2006 DE 202006015058 U
(43) Veröffentlichungstag der Anmeldung: 02.04.2008
(73) Patentinhaber: Arnold AG, 61381 Friedrichsdorf (DE)
(72) Erfinder: Grimm, Michael, 61250 Usingen/Eschbach (DE); Arnold, Uwe, 61440 Oberursel (DE)
(74) Vertreter: Schubert, Siegmar

(56) Entgegenhaltungen:
- AT-B- 332 066
- DE-A1- 2 435 301
- US-A- 3 619 960

## Beschreibung

Die Erfindung betrifft eine Deckenbefestigungsprofilanordnung für flächige Objekte, insbesondere vertikal aufgehängte Glasscheiben als Rauchschürzen nach dem Oberbegriff des Anspruchs 1.

Bei derartigen aus der Praxis bekannten Deckenbefestigungsprofilanordnungen werden Glasscheiben bzw. andere flächige Objekte in einem Schienenhohlprofil mittels von außen sichtbaren Klemmsystemen aus Aluminium mit Klemmzangen eingeklemmt. Die Glasscheiben bzw. Objekte sind mittels solcher Klemmzangen umständlich mit Werkzeugen zu montieren. Außerdem wirken die sichtbaren Klemmsysteme mit Klemmzangen ästhetisch wenig ansprechend.

Bekannt ist bereits eine Deckenbefestigungsprofilanordnung mit einer Profilschiene zum Tragen der Einzelelemente angehängter Zwischendecken mit einem unten offenen Aufnahmeraum zur Unterbringung einer Führungsschiene für einen senkrechten Lamellenvorhang (DE 24 35 301 A1). Die Profilschiene ist ein Schienenhohlprofil mit zwei waagerechten Wangen, von denen sich zwei Schenkel senkrecht nach unten erstrecken und zwischen sich den unten offenen Aufnahmeraum bilden, in den die Führungsschiene eingesetzt werden kann. Die Führungsschiene weist auf ihrer Oberseite um jeweils eine vertikale Achse schwenkbare Halteglieder in Form von länglichen Querriegeln auf, die mittels als Schrauben ausgebildeter Betätigungselemente geschwenkt werden. Die Querriegel erstrecken sich in einer Öffnungsstellung nur in einem Längsschlitz, durch den sie in einen Kanal der Profilschiene eingeführt werden können. In einer Schließstellung liegen die Querriegel auf den waagerechten Wangen des Schienenhohlprofils der Profilschiene auf. An die Unterseite der Querriegel ist jeweils ein klemmender Ansatz angeformt, der in der Öffnungsstellung in je ein Langloch der Führungsschiene eingedrückt ist, um sich beim Einsetzen der Führungsschiene nicht zu verschwenken. Um nach dem Einsetzen schwenkbar zu sein, werden die Querriegel mit einem Schraubenzieher nach oben gedrückt und nach Schwenken in Schließstellung angezogen. - Die Schrauben sind jedoch mit dem Schraubenzieher nur zugänglich, soweit die in die Profilschiene eingesetzte Führungsschiene unten in einem zentralen Bereich offen ist, d.h. nicht durch den Lamellenvorhang geschlossen bzw. abgedeckt ist.

Der vorliegenden Erfindung liegt die Aufgabe zugrunde, eine Deckenbefestigungsprofilanordnung zu schaffen, mit der ohne die obige Einschränkung die Glasscheiben und dergleichen Objekte deckenbündig verdeckt, d.h. von unten praktisch unsichtbar geschützt angebracht werden können, und zwar durch weitgehend werkzeuglose Montage.

Diese Aufgabe wird durch eine Deckenbefestigungsprofilanordnung mit den in Anspruch 1 angegebenen Merkmalen gelöst.

Somit wird von einem Schienenhohlprofil ausgegangen, welches innen mindestens eine im wesentlichen waagerechte Wange aufweist, von der ein erster Schenkel senkrecht nach unten abgewinkelt ist, wobei parallel zu dem ersten Schenkel und in lichtem Abstand zu diesem ein zweiter im wesentlichen senkrechter Schenkel vorgesehen ist, der zusammen mit dem ersten Schenkel einen Innenraum mit einer unten offenen Seite begrenzt. Der Innenraum wird als Klemmstückaufnahmeraum bezeichnet, weil in ihm mindestens ein Klemmstück eingesetzt werden kann, welches geeignet ist, einen Randbereich des flächigen Objekts einzuklemmen.

Das flächige Objekt kann insbesondere eine Glasscheibe bzw. ein Verbund von zwei Glasscheiben sein, der aus zwei miteinander verklebten Scheiben besteht und unter der Bezeichnung VSG-Scheibe bekannt ist. Die Scheiben sind insbesondere als Rauchschürzen dimensioniert, die sicherstellen sollen, dass sich Rauchentwicklung auf einen Raum beschränkt und nicht auf benachbarte Räume übergreift.

Zur Anbringung des flächigen Objekts dienen Klemmstücke, die sich gemäß Anspruch 11 jeweils nur über einen Längsabschnitt des Schienenhohlprofils erstrecken, welches über seiner Länge der Kontur des flächigen Objekts folgt. Insofern sind normalerweise keine Anpassungen an die Kontur der einzusetzenden flächigen Objekte erforderlich. Ein solches Klemmstück weist weiter einen um eine vertikale Achse schwenkbaren Riegel und ein der offenen Seite des Klemmstückaufnahmeraums betätigbares Betätigungselement des Riegels auf. Der Riegel kann zwei definierte Positionen, eine Öffnungsstellung und eine Schließstellung, einnehmen, auf die er mit dem Betätigungselement eingestellt wird. In der Öffnungsstellung ist der Riegel so geschwenkt, dass er nicht seitlich über das Klemmstück übersteht bzw. nur zwischen den Schenkeln des Schienenhohlprofils oder in einem senkrecht über den Schenkeln erweiterten Kopfabschnitt des Schienenhohlprofils neben der Wange erstreckt. Wenn sich die Riegel der Klemmstücke in Öffnungsstellung befinden, können die Klemmstücke zusammen mit dem flächigen Objekt, an dessen Randbereich sie angeklemmt sind, in das Schienenhohlprofil, insbesondere von unten, eingeschoben werden oder aus diesem entnommen werden. Hingegen sind in der Schließstellung des Riegels diese so geschwenkt, dass sie auf der Wange in dem Schienenhohlprofil aufliegen und somit das entsprechende Klemmstück zusammen mit dem angeklemmten flächigen Objekt tragen. Nach solcher Montage ragt das flächige Objekt unten aus der offenen Seite des Schienenhohlprofils heraus. Hingegen kann das Betätigungselement des Riegels zumindest in der Schließstellung zwischen den beiden Schenkeln des Schienenhohlprofils eingeschwenkt sein, wie weiter unten erläutert wird.

Im Prinzip können die Öffnungsstellung und die Schließstellung mit dem Riegel bereits eingestellt werden, wenn dieser in der Schließstellung nur auf einer seitlichen waagerechten Wange aufliegt bzw. in Öffnungsstellung von dieser abgerückt ist, und zwar wenn das Schienenhohlprofil und die Klemmstücke so dimensioniert sind, dass sich die Klemmstücke in dem Schienenhohlventil trotz einseitiger Auflage nicht nennenswert verkanten bzw. wenn die Klemmstücke durch Stellmittel gerade ausgerichtet werden.

Bevorzugt weist jedoch zur symmetrischen Aufhängung der Klemmstücke mittels der Riegel ein Schienenprofil innen zwei waagerechten Wangen im lichten Abstand zueinander auf, von denen der erste und der zweite Schenkel senkrecht nach unten unter Einhaltung des lichten Abstands abgewinkelt sind. Der zugehörige Riegel ist so ausgebildet und angeordnet, dass er in Schließstellung auf beiden Wangen aufliegt und somit das Objekt, welches in die Klemmstücke eingeklemmt ist, ohne weiteres vertikal ausgerichtet hält.

Das Schienenprofil ist insbesondere für die voranstehende symmetrische Ausbildung mit zwei waagerechten Wangen gemäß Anspruch 9 einstückig annähernd Ω-förmig ausgebildet, und zwar mit den beiden im lichten Abstand zueinander angeordneten Schenkeln, die unten eine offene Seite begrenzen, mit sich oben seitlich an die Schenkel anschließenden waagerechten Wangen, über denen sich ein erweiterter Hohlraum ausdehnt.

Das Schienenhohlprofil ist gemäß Anspruch 10 zweckmäßig ein Strangpressprofil aus Aluminium, welches leicht so herstellbar ist, dass es der Kontur des einzusetzenden flächigen Objekts folgt.

Erfindungsgemäß und besonders funktionssicher gegen unbeabsichtigtes Lösen des flächigen Objekts aus der Deckenbefestigungsprofilanordnung ist der Riegel des Klemmstücks durch eine Feder so vorbelastet, dass er diese in die Schließstellung zu schwenken versucht, wenn keine weitere Kraft bzw. kein weiteres Moment zum manuellen Schwenken des Riegels auf diesen einwirkt. Vor allem ist das mit dem Riegel zusammenwirkende Betätigungselement als zweiarmiger Hebel ausgebildet, der um eine waagerechten Achse an einer Längsseite des Klemmstücks schwenkbar ist, wobei ein oberer Hebelarm dergestalt an dem Riegel anliegt, dass dieser durch manuelles Schwenken des Hebels in die Öffnungsstellung entgegen der Federkraft bewegt wird, wozu ein unterer Hebelarm an der offenen Seite des Schienenhohlprofils betätigt werden kann. Um ein unbefugtes Öffnen der Verbindung des flächigen Elements zu dem Schienenhohlprofil zu verhindern, kann die manuelle Betätigung, wie weiter unten angegeben, ein Werkzeug erfordern.

Um den Riegel in zwei stabile Endstellungen, nämlich entweder die Öffnungsstellung oder die Schließstellung, zu schwenken, umfasst das Betätigungselement besonders vorteilhaft gemäß Anspruch 2 ein knieförmiges Hebelblech, welches so ausgebildet und angeordnet ist, dass der Riegel in Schließstellung an einer Kante des oberen Hebelarms anliegt, von der sich der Riegel beim Schwenken des Hebelblechs in Öffnungsstellung löst, wobei er an eine flache Längsseite des oberen Hebelarms durch die Feder gedrückt wird, durch die er - wie oben angegeben - vorbelastet ist. Beim Schwenken des Hebelblechs in die Schließstellung schnappt der vorbelastete Riegel vor die Kante des oberen Hebelarms zurück und kann diesem bis zum Erreichen der Schließstellung folgen.

Ein unbeabsichtigtes Öffnen des Klemmstücks durch Schwenken des Riegels in Öffnungsstellung wird verhindert, indem gemäß Anspruch 3 von dem unteren Hebelarm des Hebelblechs eine Betätigungsfläche seitlich dergestalt abgewinkelt ist, dass die Betätigungsfläche in Schließstellung des Riegels an einer unteren Seite des Klemmstücks anliegt. Der anliegende untere Hebelarm in der unten offenen Seite des Schienenhohlprofils kann nicht ohne weiteres manuell ergriffen werden.

Vielmehr ist zum Betätigen des Betätigungselements zur Öffnungsstellung hin an der Unterseite des Klemmstücks nach Anspruch 4 ein Spalt ausgeformt, an dem die Betätigungsfläche mit einem Werkzeug untergriffen werden kann, um das Betätigungselement entgegen der Kraft der Feder des Riegels zu schwenken.

Als besonders kompakte funktionssichere Einheit ist das Klemmstück gemäß Anspruch 5 aus einem Klemmprofil und einer Klemmplatte unter Einschluss einer senkrechten Klemmebene zusammengesetzt. Das Klemmprofil und die Klemmplatte schließen einen Klemmraum ein, in den ein Randabschnitt des Objekts eingeklemmt werden kann. Innerhalb eines Kopfs des Klemmprofils ist der Riegel gelagert, der in Schließstellung durch einen ersten waagerechten Schlitz des Klemmprofils reicht.

Gemäß Anspruch 6 kann die Klemmplatte auf der dem ersten Schlitz in dem Kopfabschnitt des Klemmprofils gegenüberliegenden Seite mit einem entsprechenden zweiten waagerechten Schlitz versehen sein, durch den der Riegel ebenfalls in Schließstellung reicht, um im wesentlichen symmetrisch beidseitig vorzustehen und eine gleichmäßige Auflagerung auf den Wangen des Schienenhohlprofils zu bilden.

Gemäß Anspruch 7 ist weiterhin zweckmäßig das Hebelblech annähernd mittig an einem Bolzen um die waagerechte Schwenkachse schwenkbar gelagert verbunden, wobei der Bolzen durch einander gegenüberliegende Bohrungen des Klemmstücks und der Klemmplatte sowie das zwischen diesen eingeklemmte Objekt hindurchreicht. Dabei kann der Bolzen durch ein Loch in dem flächigen Objekt hindurchreichen und dieses zusätzlich zur Klemmung tragen bzw. gegen ein Herausgleiten sichern.

Ein Ausführungsbeispiel der Deckenbefestigungsprofilanordnung wird im folgenden anhand einer Zeichnung mit fünf Figuren beschrieben, woraus sich weitere vorteilhafte Einzelheiten der Erfindung ergeben können. Es zeigen:
- Figur 1: ein Klemmstück mit eingeklemmter Doppelscheibe in ei- ner Öffnungsstellung vor Einsetzen der Doppelscheibe in ein Schienenhohlprofil, von dem nur ein Längsabschnitt dargestellt ist, bzw. vor Entnahme,
- Figur 2: das Klemmstück gemäß Anspruch 1, jedoch in Schließstellung, die normalerweise nur eingestellt wird, wenn das Klemmstück mit eingeklemmter Doppelscheibe in das Schienenhohlprofil eingesetzt ist,
- Figur 3: das Klemmstück in Schließstellung gemäß Figur 2 in einer auseinander gezogenen Darstellung von Bestandteilen des Klemmstücks,
- Figur 4: einen Querschnitt durch das in das Schienenhohlprofil eingesetzte Klemmstück, und zwar in einem Schnitt mit der Schnittebene A-A, die in Figur 2 angedeutet ist, und
- Figur 5: einen Längsschnitt durch das in das Schienenhohlprofil eingesetzte Klemmstück in der Ebene B-B in Figur 2.

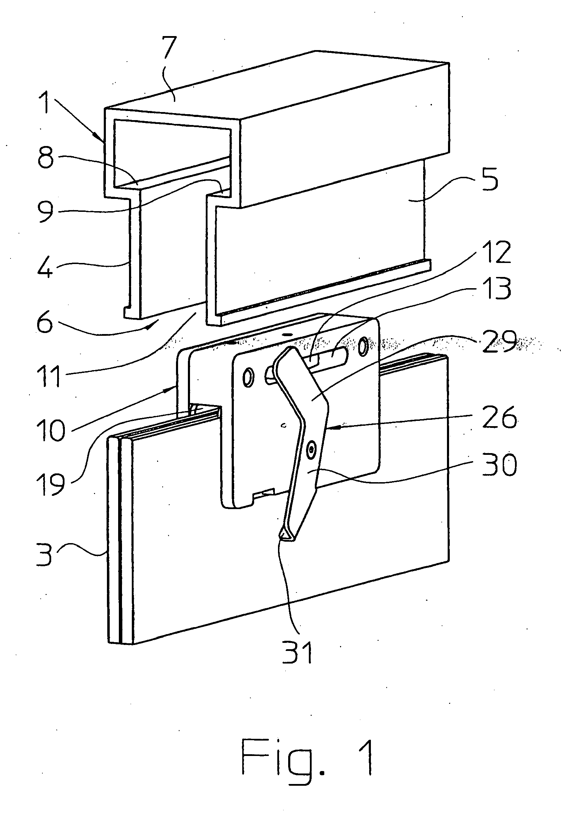

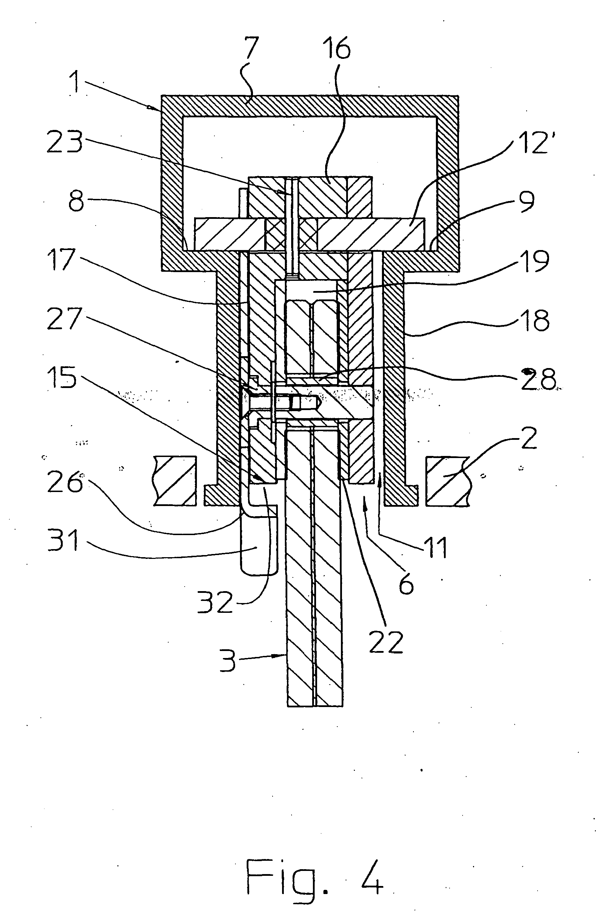

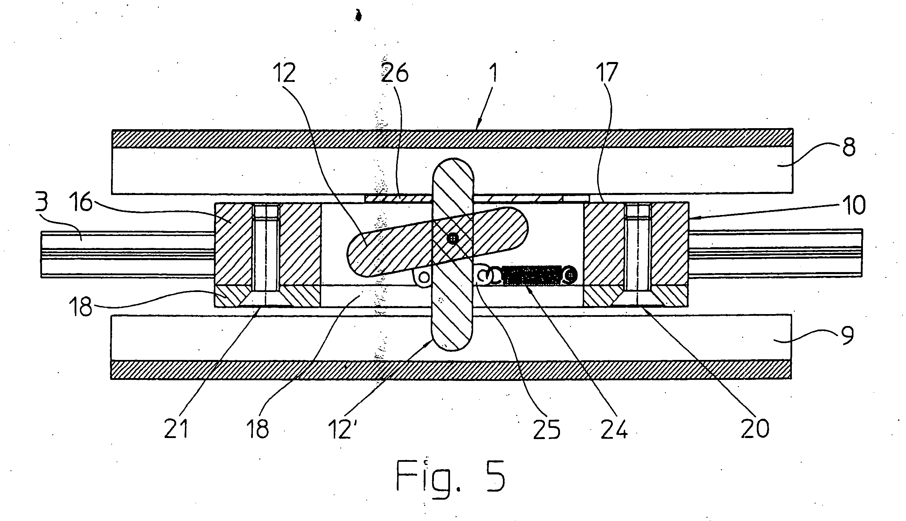

In den Figuren 1 - 3 ist die Deckenbefestigungsprofilanordnung kleiner als in den Figuren 4 und 5 dargestellt.

In der Zeichnung ist mit 1 ein Abschnitt eines Schienenhohlprofils bezeichnet, welches - wie in Figur 4 angedeutet - in einer Decke 2 eines Bauwerks montiert werden kann und eine Länge aufweist, die einer Länge einer einzuklemmenden Glasscheibe 3, hier einer VSG-Scheibe, die als Rauchschürze geformt ist, entspricht. Das Schienenhohlprofil hat zwei parallele Schenkel 4, 5, die unten eine offene Seite 6 begrenzen und oben in einen erweiterten Kopfabschnitt 7 übergehen. Die beiden Schenkel verlaufen mit einem gegenseitigen lichten Abstand parallel zueinander. Sie gehen oben in den erweiterten Kopfabschnitt mit seitlichen waagerechten Wangen 8 und 9 über.

Zur Lagerung der teilweise zwischen die Schenkel 4, 5 des Schienenhohlprofils einschiebbaren Glasscheibe 3 ist diese in ihrem oberen, nicht bezeichneten Randbereich in Klemmstücke eingeklemmt, von denen eines mit 10 bezeichnet ist. Die Klemmstücke sind in Längsrichtung kürzer als die Glasscheibe 3, die mittels mehreren derartige Klemmstücken in einem längeren Schienenhohlprofilabschnitt gehalten werden kann. Die Klemmstücke sind dazu in einen Klemmstückaufnahmeraum 11 des Schienenhohlprofils von unten eingeschoben, wie in Figur 4 dargestellt.

Damit die Klemmstücke mit der Glasscheibe 3 und den Klemmstückaufnahmeraum 11 von unten eingeführt oder nach unten entnommen werden können, ist ein in dem Klemmstück um eine vertikale Achse schwenkbarer Riegel 12 in seitliche Schlitze 13, 14, siehe auch Figur 4, in dem Klemmstück 10 eingeschwenkt, so dass der Riegel seitlich nicht über das Klemmstück hinausragt. Diese Position des Riegels 12 ist in den Figuren 1 und alternativ 5 gezeigt.

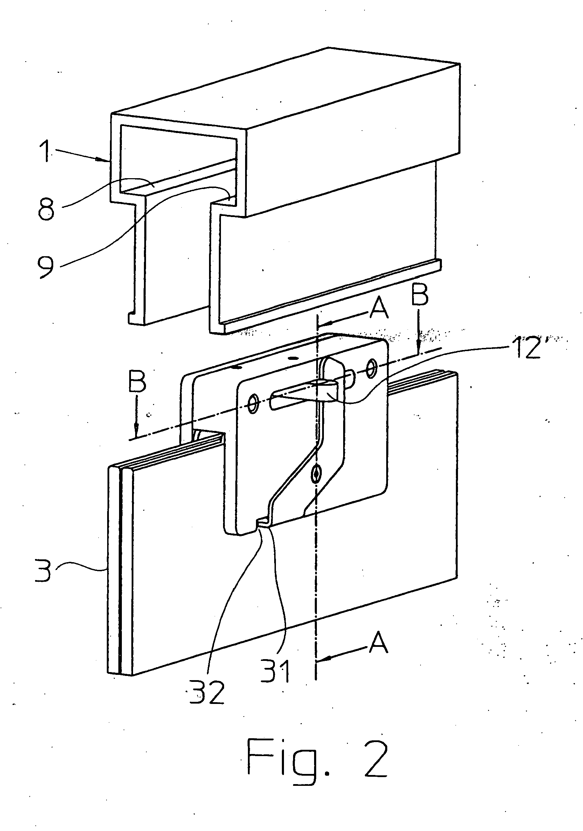

In Schließstellung ragt der in diesem Fall mit 12' bezeichnete Riegel jedoch seitlich aus den Schlitzen 13, 14 heraus, so dass er auf den Wangen 8, 9 in dem Schienenhohlprofil 1 aufliegt und das Klemmstück mit der darin eingeklemmten hängenden Glasplatte 3 tragen kann. In der Schließstellung ist der Riegel 12' in den Figuren 2 - 5 dargestellt.

Im nachfolgenden wird das Klemmstück 10 näher beschrieben:

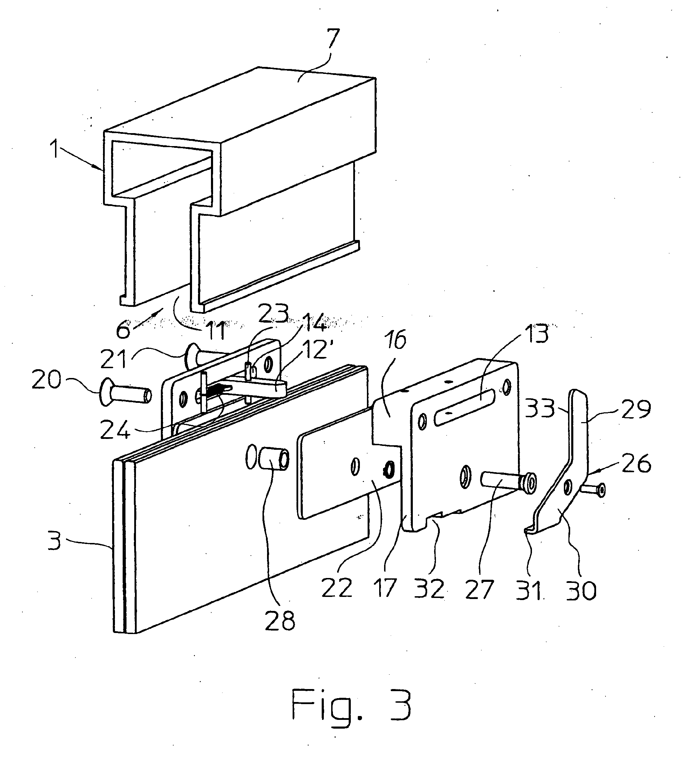

Es umfasst ein Klemmprofil 15, welches mit Ausnahme eines seitlich vorstehenden Kopfes 16 einen ebenen Wandabschnitt 17 hat, sowie eine Klemmplatte 18, welche den ebenen Wandabschnitt und den Kopf 16 des Klemmprofils seitlich abdeckt, unter Freilassung eines unten offenen Klemmraums 19, der geeignet ist, den Randabschnitt der Glasscheibe 3 aufzunehmen, siehe insbesondere Figuren 3 und 4. Auf einander gegenüberliegenden Seiten des Klemmprofils und der Klemmplatte sind in diesen Schlitze 13, 14 ausgeformt, welche sich in Längsrichtung des Kopfstücks entsprechend der Hauptrichtung des Schienenhohlprofils erstrecken und durch die der Riegel 12' hindurchreichen kann, wenn dieser nicht innerhalb der Schlitze 13, 14 zurückgezogen ist. Das Klemmprofil 15 und die Klemmplatte 18 können unter Einschluss der Glasscheibe 3 fest mittels Senkschrauben 20, 21 zusammengehalten bzw. zusammengepresst werden. Zum Schutz der Glasscheiben kann dabei noch eine deren Randabschnitt schützende elastische Unterlage 22, z.B. aus Gummi, dienen, siehe Figur 4.

Der zum Auflagern des Klemmstücks 10 in dem Schienenhohlprofil 1 vorgesehene Riegel 12' bzw. 12 ist mit einem Zylinderstift 23 als vertikale Drehachse in dem Kopf 16 des Klemmprofils 15 schwenkbar gelagert, siehe insbesondere Figur 4. Er steht unter der Vorspannung einer ebenfalls in dem Kopf 16 untergebrachten Zugfeder 24, die gemäß Figur 5 an einem Ansatz 25 des Riegels 12' angreift und den Riegel 12' in die Schließstellung zu schwenken sucht.

Zum willkürlichen Schwenken des Riegels in eine Öffnungsstellung entgegen der Kraft der Zugfeder 24 ist außen an den ebenen Wandabschnitt 17 des Klemmprofils 15 anliegend ein Hebelblech 26 angeordnet, welches annähernd mittig um einen Bolzen 27, d.h. eine waagerechte Schwenkachse schwenkbar ist. Der Bolzen 27 reicht durch den ebenen Wandabschnitt 17, die Glasscheibe 3 und die Klemmplatte 18 hindurch. Für die Glasscheibe fungiert er daher als zusätzliche Halterung in dem Klemmstück 10. Die nicht bezeichnete Bohrung in der Glasscheibe, durch welche der Bolzen 27 aus Stahl hindurchreicht, ist mit einer Hülse 28 aus Kunststoff bzw. Gummi geschützt.

Die Form des knieförmigen Hebelblechs 26 geht am besten aus den Figuren 1 - 3 hervor. Das Hebelblech hat einen oberen Hebelarm 29, der mit dem Riegel 12 bzw. 12' kooperiert, sowie einen unteren Hebelarm 30, der unten an dem Klemmprofil 15 anliegen kann, siehe insbesondere Figur 2. Hierzu ist eine Betätigungsfläche 31 von dem unteren Hebelarm abgewinkelt. In der in den Figuren 2 und 3 dargestellten Schließstellung liegt die abgewinkelte Betätigungsfläche über einem abgestuften Spalt 32 an der Unterseite des Klemmprofils, so dass er mit der Unterseite im wesentlichen bündig abschließt, jedoch durch Einschieben eines Werkzeugs in den Spalt zu der in Figur 1 dargestellten Öffnungsstellung hin entgegen dem Uhrzeigersinn geschwenkt werden kann. Dazu lässt sich die Betätigungsfläche 31 nach Herausheben aus dem Spalt weiter direkt manuell ohne Werkzeug betätigen, was auch für das Zurückschwenken zu dem Spalt hin im Uhrzeigersinn gilt. Der Riegel und das Hebelblech haben folgende Funktionen:

Normalerweise, d.h. wenn durch das Hebelblech 26 keine Kraft zum Verschwenken des Riegels 12 bzw. 12' auf diesen ausgeübt wird, befindet sich der Riegel 12' in der Schließstellung, in die er durch die Zugfeder 24 gezogen wird. Er kann dabei an einer Kante des Hebelblechs anliegen, aber auch an einem anderen nicht bezeichneten festen Anschlag, der eine weitere Schwenkung als in Figur 5 bei 12' dargestellt verhindert, bei der zwei Arme des Riegels gleichmäßig auf den waagerechten Wangen 8 und 9 des Schienenhohlprofils 1 aufliegen. In dieser Stellung des Hebelblechs 26 liegt - wie oben erwähnt - dessen Betätigungsfläche 31 bündig an dem Spalt 32.

Um aus dieser stabilen Lage den Riegel in eine geöffnete Stellung zu bringen, in der er - wie bei 12 in Figur 5 dargestellt - nicht seitlich über das Klemmstück 10 übersteht, wird das Hebelblech zunächst durch ein Werkzeug aus dem Spalt gehebelt und anschließend manuell entgegen dem Uhrzeigersinn geschwenkt, wodurch seine Kante 33 den Riegel 12' mitnimmt und in die Schließstellung schwenkt. Wenn er die Schließstellung erreicht, gleitet die Kante 33 von dem Riegel ab, der dann seitlich durch die Zugfeder 24 an den oberen Hebelarm 29 des Hebelblechs 26 gedrückt wird, so dass auch diese Stellung stabil ist, wenn das Hebelblech losgelassen wird. Wie oben erwähnt kann das Klemmstück 10 mit der Glasscheibe 3 einfach in den Klemmstückaufnahmeraum 11 eingeschoben werden. Durch Zurückschwenken des Hebelblechs 26 in Figur 1 im Uhrzeigersinn wird zunächst der Riegel 12 freigegeben, so dass er aus den Schlitzen 13 und 14 herausschwenken kann und der Kante 33 des Hebelblechs 26 bis zum Erreichen der Öffnungsstellung folgen kann, in der er stabil auf den waagerechten Wangen 8 und 9 aufliegt.

### Bezugszahlenliste

- 1: Schienenhohlprofil
- 2: Decke
- 3: Glasscheibe
- 4: Schenkel
- 5: Schenkel
- 6: offene Seite
- 7: erweiterter Kopfabschnitt
- 8: waagerechte Wange
- 9: waagerechte Wange
- 10: Klemmstück
- 11: Klemmstückaufnahmeraum
- 12: Riegel
- 12': Riegel in Schließstellung
- 13: Schlitz
- 14: Schlitz
- 15: Klemmprofil
- 16: Kopf
- 17: ebener Wandabschnitt
- 18: Klemmplatte
- 19: Klemmraum
- 20: Senkschraube
- 21: Senkschraube
- 22: Unterlage
- 23: Zylinderstift
- 24: Zugfeder
- 25: Ansatz
- 26: Hebelblech
- 27: Bolzen
- 28: Hülse
- 29: oberer Hebelarm
- 30: unterer Hebelarm
- 31: Betätigungsfläche
- 32: Spalt
- 33: Kante des Hebelblechs

## Patentansprüche

1. Deckenbefestigungsprofilanordnung für flächige Objekte, insbesondere vertikal aufgehängte Glasscheiben (3) als Rauchschürzen, mit einem an einer Decke anbringbaren Schienenhohlprofil (1) und wenigstens einem Klemmstück (10),
wobei das Schienenhohlprofil (1) innen mindestens eine im wesentlichen waagerechte Wange (8) aufweist, von der ein erster Schenkel (4) senkrecht nach unten abgewinkelt ist,
wobei das Schienenhohlprofil (1) parallel zu dem ersten Schenkel (4) und in lichtem Abstand zu diesem einen zweiten im wesentlichen senkrechten Schenkel (5) umfasst, der zusammen mit dem ersten Schenkel einen Klemmstückaufnahmeraum (11) mit einer unten offenen Seite (6) begrenzt, in den das wenigstens eine Klemmstück (10) einsetzbar ist, welches gegebenenfalls geeignet ist, einen Randbereich des flächigen Objekts einzuklemmen,
wobei das Klemmstück einen um eine vertikale Achse (23) schwenkbaren Riegel (12, 12') und ein an der offenen Seite (6) des Klemmstückaufnahmeraums (11) betätigbares Betätigungselement (26) des Riegels (12, 12') aufweist und
wobei der Riegel sowie das Betätigungselement so ausgebildet und angeordnet sind, dass sich der Riegel (12) in einer Öffnungsstellung nur zwischen den Schenkeln (4, 5) bzw. in einem über den Schenkeln erweiterten Kopfabschnitt (7) des Schienenhohlprofils (1) neben der Wange (8) erstreckt, jedoch in einer Schließstellung auf der Wange (8) aufliegt,
**dadurch gekennzeichnet,**
**dass** der Riegel (12') durch eine Feder (24) zu der Schließstellung vorbelastet ist,
**dass** das Betätigungselement (26) als zweiarmiger Hebel ausgebildet ist, der um eine waagerechte Achse (27) an einer Längsseite (17) des Klemmstücks schwenkbar ist,
**dass** ein oberer Hebelarm (29) dergestalt an dem Riegel (12') anliegt, dass dieser durch Schwenken des Hebels in die Öffnungsstellung schwenkbar ist, und
**dass** ein unterer Hebelarm (30) an der offenen Seite (16) des Schienenhohlprofils manuell betätigbar ist.

2. Deckenbefestigungsprofilanordnung nach Anspruch 1,
**dadurch gekennzeichnet,**
**dass** das Betätigungselement (26) ein knieförmiges Hebelblech umfasst, welches so ausgebildet und angeordnet ist, dass der Riegel (12 bzw. 12') in Schließstellung und beim Schwenken zur Offenstellung an einer Kante (33) des oberen Hebelarms (29) anliegt, sich bei Erreichen der Offenstellung von der Kante (33) löst und an eine flache Längsseite des oberen Hebelarms (29) gedrückt wird, von welcher der obere Hebelarm (29) beim Schwenken in die Schließstellung an die Kante (33) des Riegels (12, 12') zurückschnappt.

3. Deckenbefestigungsprofilanordnung nach Anspruch 2,
**dadurch gekennzeichnet,**
**dass** von dem unteren Hebelarm (30) eine Betätigungsfläche (31) seitlich dergestalt abgewinkelt ist, dass die Betätigungsfläche in Schließstellung des Riegels an einer unteren Seite des Klemmstücks (10) anliegt.

4. Deckenbefestigungsprofilanordnung nach Anspruch 3,
**dadurch gekennzeichnet,**
**dass** an der Unterseite des Klemmstücks (10) ein Spalt (32) ausgeformt ist, an dem die Betätigungsfläche (31) zum Betätigen in die Öffnungsstelle untergreifbar ist.

5. Deckenbefestigungsprofilanordnung nach einem der vorangehenden Ansprüche,
**dadurch gekennzeichnet,**
**dass** das Klemmstück (10) mit einem Klemmprofil (15) und einer Klemmplatte (18) an einer senkrechten Klemmebene so zusammengesetzt ist, dass sie einen Klemmraum (19) an dessen Längsseiten begrenzen, dass der Riegel (12 bzw. 12') innerhalb eines Kopfs (16) des Klemmprofils (15) gelagert ist, der seitlich einen ersten waagerechten Schlitz (13) aufweist, durch den der Riegel (12') in Schließstellung reicht.

6. Deckenbefestigungsprofilanordnung nach Anspruch 5,
**dadurch gekennzeichnet,**
**dass** die Klemmplatte (18) auf der dem ersten Schlitz (13) in dem Kopf (16) des Klemmprofils (15) gegenüberliegenden Seite mit einem entsprechenden zweiten waagerechten Schlitz (14) versehen ist, durch den der Riegel (12') in Schließstellung reicht.

7. Deckenbefestigungsprofilanordnung nach einem der vorangehenden Ansprüche,
**dadurch gekennzeichnet,**
**dass** das Hebelblech (26) annähernd mittig an einem Bolzen (27) um die waagerechte Schwenkachse schwenkbar gelagert ist,
**dass** der Bolzen (27) durch einander gegenüberliegende Bohrungen des Klemmprofils (15) und der Klemmplatte (18) sowie das zwischen diesen eingeklemmte Objekt hindurchreicht.

8. Deckenbefestigungsprofilanordnung nach einem der vorangehenden Ansprüche,
**dadurch gekennzeichnet,**
**dass** das Schienenhohlprofil (1) innen zwei waagerechte Wangen (8, 9) im lichten Abstand zueinander aufweist, von denen der erste und der zweite Schenkel (4, 5) senkrecht nach unten unter Einhaltung des lichten Abstands abgewinkelt sind, und
**dass** der Riegel (12') so ausgebildet und angeordnet ist, dass er in Schließstellung auf beiden Wangen (8, 9) aufliegt.

9. Deckenbefestigungsprofilanordnung nach einem der vorangehenden Ansprüche,
**dadurch gekennzeichnet,**
**dass** das Schienenhohlprofil (1) einstückig annähernd Ω-förmig ausgebildet ist.

10. Deckenbefestigungsprofilanordnung nach einem der vorangehenden Ansprüche,
**dadurch gekennzeichnet,**
**dass** das Schienenhohlprofil (1) ein Strangpressprofil aus Aluminium ist.

11. Deckenbefestigungsprofilanordnung nach einem der vorangehenden Ansprüche,
**dadurch gekennzeichnet,**
**dass** sich das Klemmstück (10) nur über einen Längsabschnitt des Schienenhohlprofils (1) erstreckt.

## Claims

1. Arrangement for fixing flat objects to a ceiling, especially vertically suspended glass (3) as a smoke enclosure including a rail hollow profile (1) to be fixed to a ceiling having at least one clamping means (10),
wherein the rail hollow profile includes in its interior at least one substantially horizontal cheek (8) from which a first leg (4) is perpendicularly bent downwardly,
wherein the rail hollow profile (1) in parallel to the first leg (4) and at a clear distance to it comprises a second substantially perpendicular leg (5) which together with the first leg defines a clamping means take-up space (11) having a side (6) open on the bottom into which the at least one clamping means (10) may be inserted which is suited in a given case to clamp an edge area of the flat object,
wherein the clamping means includes a lock bolt (12, 12') pivotal about a vertical
shaft (23) and an actuation element (26) of the lock bolt (12, 12') to be actuated on the open side (6) of the clamping means take-up space (11), and
wherein the lock bolt and the actuation element are so designed and disposed that when in an opening position, the lock bolt (12) extends only between the legs (4, 5) or in an expanded head section (7) of the rail hollow profile (1) above the legs aside of the cheek (8), however, when in a locking position, rests on the cheek (8)
**characterized in**
**that** the lock bolt (12') is pre-stressed by a spring towards the locking position,
**that** the actuation element (26) is shaped as a two-armed lever pivotal about a horizontal shaft (27) on one longitudinal side (17) of the clamping means,
**that** an upper lever arm (29) rests on the lock bolt (12') so that it may be pivoted into the opening position by pivoting the lever, and that a lower lever arm (30) on the open side (16) of the rail hollow profile may manually be actuated.

2. Arrangement for fixing flat objects to a ceiling according to claim 1,
**characterized in**
**that** the actuation element (26) comprises a knee-shaped lever sheet which is so designed and disposed that the lock bolt (12, or 12') when in the locking position and when pivoted towards the opening position rests on one edge (33) of the upper lever arm (26), when reaching the opening position detaches itself from the edge (33), and is pressed to one flat longitudinal side of the upper lever arm (29), from which the upper lever arm (29) when pivoted into the locking position bounces back to the edge (33) of the lock bolt (12, 12').

3. Arrangement for fixing flat objects to a ceiling according to claim 2,
**characterized in**
**that** an actuation face (31) is bent off from the lower lever arm (30) in such a way that the actuation face when in the locking position of the lock bolt rests against a lower side of the clamping means (10).

4. Arrangement for fixing flat objects to a ceiling according to claim 3,
**characterized in**
**that** on the lower side of the clamping means (10) a gap (32) is provided into which the actuation face (31) may engage in the opening location for actuating.

5. Arrangement for fixing flat objects to a ceiling according to one of the foregoing claims,
**characterized in**
**that** the clamping means (10) is so composed together with a clamping profile (15) and a clamping plate (18) on a perpendicular clamping plane, that they define a clamping space (19) on its longitudinal sides, that the lock bolt (12 or 12') is supported within a head (16) of the clamping profile (15) which laterally has a first horizontal slot (13) through which the lock bolt (12') extends when in the locking position.

6. Arrangement for fixing flat objects to a ceiling according to claim 5,
**characterized in**
**that** the clamping plate (18) on the side opposite of the first slot (13) in the head (16) of the clamping profile (15) is provided with a corresponding second horizontal slot (14) through which the lock bolt (12') extends when in the locking position

7. Arrangement for fixing flat objects to a ceiling according to one of the foregoing claims,
**characterized in**
**that** the lever sheet (26) is pivotally supported approximately in the middle about the horizontal pivot axis on a bolt (27),
**that** the bolt (27) extends through bores facing each other of the clamping section (15) and of the clamping plate (18) and through the object clamped between them.

8. Arrangement for fixing flat objects to a ceiling according to one of the foregoing claims,
**characterized in**
**that** the rail hollow profile (1) includes at its inside two horizontal cheeks (8, 9) at a clear distance relative to each other, from which the first and the second leg (4, 5) are bent perpendicularly downwardly while keeping the clear distance, and
**that** the bolt lock (12') is so designed and disposed that it rests on the two cheeks when in the locking position.

9. Arrangement for fixing flat objects to a ceiling according to one of the foregoing claims,
**characterized in**
**that** the rail hollow profile (1) is designed as one piece having approximate Ω shape.

10. Arrangement for fixing flat objects to a ceiling according to one of the foregoing claims,
**characterized in**
**that** the rail hollow profile (1) is an extrusion profile of aluminium.

11. Arrangement for fixing flat objects to a ceiling according to one of the foregoing claims,
**characterized in**
**that** the clamping means (10) extends only about one longitudinal section of the rail hollow profile (1).

## Revendications

1. Structure de profilé de fixation au plafond pour des objets plats, en particulier pour des panneaux de verre (3) suspendus pour former des pare-fumée, comprenant un profilé creux formant rail (1) qui peut être attaché à un plafond et au moins un élément de pincement (10), le profilé creux formant rail (1) présentant intérieurement au moins une joue (8) sensiblement horizontale d'où part une première branche (4) rabattue verticalement vers le bas, le profilé creux formant rail (1) comprenant, parallèlement à la première branche (4) et à une distance de dégagement de celle-ci, une seconde branche (5) sensiblement verticale (5) qui délimite avec la première branche un espace (11) de logement de l'élément de pincement présentant un côté inférieur ouvert (6) dans lequel peut être inséré ledit au moins un élément de pincement (10) qui est éventuellement approprié pour pincer une région de bord de l'objet plat, l'élément de pincement présentant un verrou (12, 12') capable de pivoter autour d'un axe vertical (23) et un élément d'actionnement (26) du verrou (12, 12') qui peut être actionné au niveau du côté ouvert (6) de l'espace (11) de logement de l'élément de pincement, et le verrou ainsi que l'élément d'actionnement étant constitués et disposés de telle sorte que, dans une position d'ouverture, le verrou (12) s'étend seulement entre les branches (4, 5) ou dans un segment de tête (7) du profilé creux forant rail (1) qui est élargi au-dessus des branches, à côté de la joue (8), tandis que, dans une position de fermeture, il prend cependant appui sur la joue (8), **caractérisée en ce que** le verrou (12') est précontraint dans la position de fermeture par un ressort (24), **en ce que** l'élément d'actionnement (26) est constitué par un levier à deux bras qui peut pivoter autour d'un axe horizontal (27), le long d'un côté longitudinal (17) de l'élément de pincement, **en ce qu'**un bras de levier supérieur (29) est adjacent au verrou (12') de telle sorte que ce dernier peut être amené par pivotement dans la position d'ouverture par pivotement du levier, et **en ce qu'**un bras de levier inférieur (30) peut être actionné manuellement au niveau du côté ouvert (16) du profilé creux formant rail.

2. Structure de profilé de fixation au plafond selon la revendication 1, **caractérisée en ce que** l'élément d'actionnement (26) comprend une plaque de tôle levier de forme coudée, qui est constituée et disposée de telle sorte que, dans la position de fermeture ainsi que lors du pivotement en position d'ouverture, le verrou (12 ou 12') est adjacent à une arête (33) du bras de levier supérieur (29) et que, lorsque la position d'ouverture est atteinte, il s'écarte de l'arête (33) et est pressé contre un côté longitudinal plat du bras de levier supérieur (29), position d'ouverture d'où le bras de levier supérieur (29) revient brusquement en position adjacente à l'arête (33) du verrou (12, 12') lors du pivotement en position de fermeture.

3. Structure de profilé de fixation au plafond selon la revendication 2, **caractérisée en ce que**, du bras de levier inférieur (30) part une surface d'actionnement (31) rabattue latéralement de telle sorte que, dans la position de fermeture du verrou, la surface d'actionnement est adjacente à un côté inférieur de l'élément de pincement (10).

4. Structure de profile de fixation au plafond selon la revendication 3, **caractérisée en ce que**, le long du côté inférieur de l'élément de pincement (10), est formée une fente (32) au niveau de laquelle la surface d'actionnement (31) peut être tirée vers le bas pour l'actionnement en position d'ouverture.

5. Structure de profilé de fixation au plafond selon l'une des revendications précédentes, **caractérisée en ce que** l'élément de pincement (10) comportant un profilé de pincement (15) et une plaque de pincement (18) est assemblé le long d'un plan de pincement vertical de telle sorte que ces éléments délimitent un espace de pincement (19) le long de ses côtés longitudinaux et que le verrou (12 ou 12') est monté à l'intérieur d'une tête (16) du profilé de pincement (15) qui présente latéralement une première fente horizontale (13) à travers laquelle le verrou (12') passe dans la position de fermeture.

6. Structure de profilé de fixation au plafond selon la revendication 5, **caractérisée en ce que** la plaque de pincement (18) est dotée, sur le côté opposé à la première fente (13) prévue dans la tête du profilé de pincement (15), d'une seconde fente horizontale correspondante (14) à travers laquelle le verrou (12') passe dans la position de fermeture.

7. Structure de profilé de fixation au plafond selon l'une des revendications précédentes, **caractérisée en ce qu'**à peu près en son milieu, la plaque de tôle levier (26) est tourillonnée sur une vis (27) pour tourner autour de l'axe de rotation horizontal, et **en ce que** la vis (27) traverse des perçages mutuellement opposés du profilé de pincement (15) et de la plaque de pincement (18), ainsi que l'objet pincé entre ces éléments.

8. Structure de profilé de fixation au plafond selon l'une des revendications précédentes, **caractérisée en ce que** le profilé creux formant rail (1) présente intérieurement deux joues horizontales (8, 9) situées à une distance de dégagement l'une de l'autre et d'où partent les première et seconde branches (4, 5) qui sont rabattues verticalement vers le bas en conservant la distance de dégagement, et **en ce que** le verrou (12') est constitué et disposé de telle sorte que, dans la position de fermeture, il prend appui sur les deux joues (8, 9).

9. Structure de profilé de fixation au plafond selon l'une des revendications précédentes, **caractérisée en ce que** le profilé creux formant rail (1) est constitué en une seule pièce à peu près en forme de Ω.

10. Structure de profilé de fixation au plafond selon l'une des revendications précédentes, **caractérisée en ce que** le profilé creux formant rail (1) est un profilé d'aluminium filé à la presse.

11. Structure de profilé de fixation au plafond selon l'une des revendications précédentes, **caractérisée en ce que** l'élément de pincement (10) s'étend seulement sur un segment de la longueur du profilé creux formant rail (1).
